# EUROPEAN PATENT SPECIFICATION

(11) **EP 0 563 943 B1**
(45) Date of publication and mention of the grant of the patent: **13.03.1996**
(21) Application number: 93105375.5
(22) Date of filing: 31.03.1993
(51) Int. Cl.: B60R 21/20

(54) **Air bag module**
Airbageinheit
Module de coussin d'air

(30) Priority: 01.04.1992 JP 28297/92 U
(43) Date of publication of application: 06.10.1993
(73) Proprietor: SENSOR TECHNOLOGY CO., LTD., Hyogo 651-22 (JP)
(72) Inventor: Dosai, Takayoshi, c/o Sensor Technology Co., Ltd., Kobe-shi, Hyogo (JP); Maeda, Takenori, c/o Sensor Technology Co., Ltd., Kobe-shi, Hyogo (JP); Takeda, Masaru, c/o Sensor Technology Co., Ltd., Kobe-shi, Hyogo (JP)
(74) Representative: Tiedtke, Harro, Dipl.-Ing.

(56) References cited:
- EP-A- 0 283 188
- US-A- 4 974 873

## Description

The present invention relates to an air bag module to be used in an air bag system for protecting the driver against an impact coming from an accident or crash of an automobile and, more particularly, to a module having a malfunction preventing device packaged therein.

An air bag module, which is constructed by integrating an air bag, an inflator, a crash sensor and an auxiliary power supply circuit, is used as an easily assembled batch package type module because what is required is to connect the module with a car battery and to mount it on a steering wheel.

Since, however, the air bag module also has the auxiliary power supply circuit packaged therein, the air bag can be operated when the module is just connected with the car battery. If, moreover, an impact is applied to the air bag module while the module is being mounted on the steering wheel, the air bag is erroneously inflated and causes a serious danger.

As disclosed in U.S.Patent No. 4,974,873, therefore, there is a known malfunction preventing device in which a control circuit is equipped with a normally open contact for interrupting the feed of an electric current to a squib for starting the inflator and is closed by bolts for fixing the air bag module on the steering wheel so that the air bag module may not be made operable before the fixing operation is completed.

However, the bolts for fixing the air bag module may be slackened to come out by the vibration or the like applied to the automobile. If the bolts become slack, the contact of the control circuit is returned from its closed states to open states and no electric current is fed to the aforementioned squib. And then the air bag module becomes inoperative. So, the air bag module has a serious trouble that the air bag is not expanded by an accidental crash.

Therefore, the present invention has been conceived in view of such problem and has an object to provide a batch packaged type air bag module which is fixed on a steering wheel by means of bolts so that a malfunction preventing device may be released as the bolts are driven and so that the released state of the malfunction preventing device may be reliably maintained even if the bolts become slack later.

According to an aspect of the present invention, there is provided an air bag module comprising the features of claim 1. As a result, no electric current is fed to the squib before the air bag module is mounted, even if the contact is closed, no malfunction occurs. When the contact is switched to its open state by the bolts for fixing the air bag module on the steering wheel, the air bag module can be brought into an operable state Even if the bolts are slackened by the vibration or the like, the above contact is held in its open state so that it never returns to an unexplored state in which the bypass circuit is connected.

According to another aspect of the present invention, there is an provided air bag module comprising the features according to claim 4. Even if the bolts are slackened by the vibration or the like, the control member keeps the switch in the closed state like the aforementioned irreversible contact.

As a result, it can not be made to the state in which the control circuit or the auxiliary power circuit is opened.

### BRIEF DESCRIPTION OF THE DRAWINGS

Fig. 1 is a section showing an air bag module according to the present invention;
Fig. 2 is a diagram showing a breakable contact in the direction of arrow x of Fig. 1
Fig. 3 is a diagram showing a structure of a breakable contact and its control circuit;
Fig. 4 is an operation diagram showing a breakable contact;
Fig 5 is a diagram showing a structure of an irreversible contact ;
Fig. 6 is an operation diagram showing an irreversible contact;
Fig. 7 is a diagram showing a structure of another irreversible control member and its control circuit; and
Fig. 8 is a diagram showing a structure of still another irreversible control member.

### DETAILED DESCRIPTION OF THE PREFERRED EMBODIMENTS

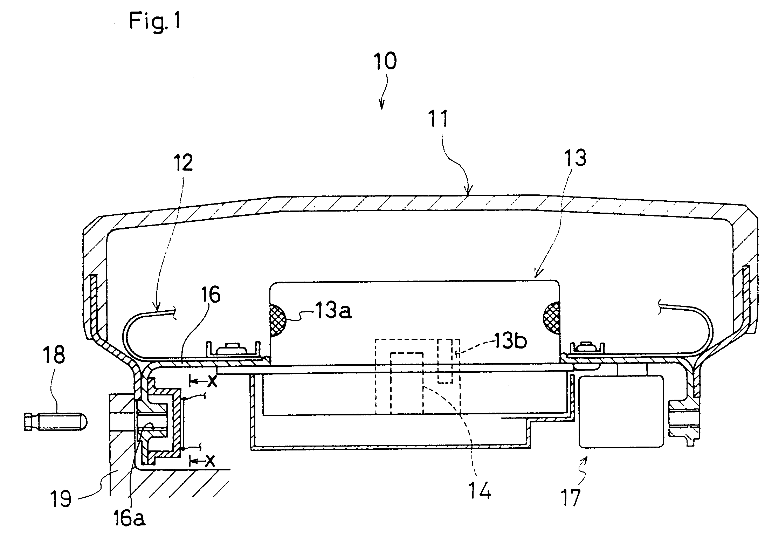

The present invention will be described in the following in connection with its embodiments with reference to the accompanying drawings. As shown in Fig. 1, an air bag module 10 is fixed on a steering wheel 19 by means of a plurality of bolts 18. For this, a retainer 16 is formed with a plurality of internal threads 16a. The air bag module 10 is constructed by attaching a cover 11, an air bag 12, an inflator 13 and a power supply 14 to the retainer 16. The inflator 13 discharges gases from its holes 13a so as to inflate the air bag 12, so that the air bag 12 breaks the cover 11 until it is expanded between a passenger and the steering wheel. On the other hand, the inflator 13 is equipped at its center with a squib 13b for igniting a gas generating agent, and a crash sensor 14 for detecting a crash. Moreover, a breakable contact 31 is attached to a position in which the internal threads 16a of the retainer 16 are covered and in which the bolts 18 have their leading ends abut against the internal threads 16a.

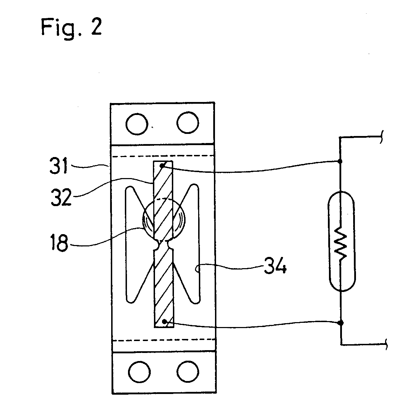

In Fig. 2 , the breakable contact in the direction of arrow x of Fig. 1 is shown. A breakable contact is formed by a board 31 which is carved so as to break when the bolts 18 are driven into the internal threads 16a and printed conductive pattern 32. The width of the conductive pattern 32 is narrow on the broken portion of the board 31 and the conductive pattern 32 is easily cut by the bolts 18. The conductive pattern 32 is connected with a bypass circuit 6 of the squib 13b and forms a part of such a control circuit 17 as will be described in the following,

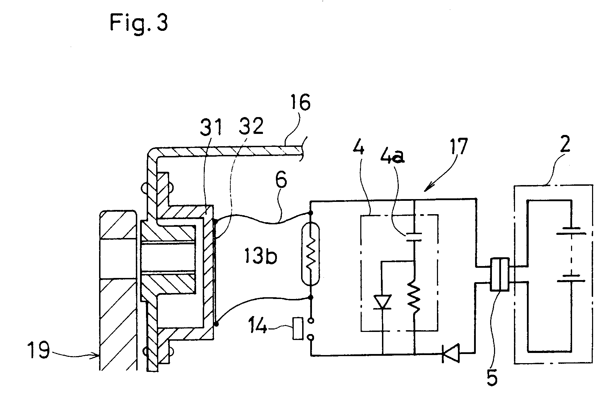

Fig. 3 shows the construction of the control circuit 17 comprising an auxiliary power supply circuit 4 having a power accumulating capacitor 4a which is connected in parallel with the series connection of the squib 13b and the crash sensor 14. The control circuit 17 thus constructed is connected through a connector 5 with a car battery 2. The bypass circuit 6 of the squib 13b for starting the inflator is in a conductive state. In this state, the electric current accumulated in the auxiliary power supply circuit 4 is discharged and the current from the car battery 2 makes a short-circuit. As a result, the squib 13b is prevented from causing a malfunction, even if the crash sensor 14 senses an unexpected impact and the control circuit 17 is closed.

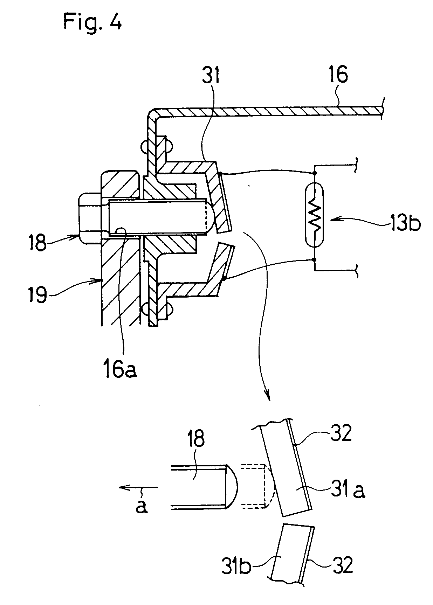

The air bag module is fixed on the steering wheel 19, as shown in Fig. 4. As the bolts 18 are driven into the internal threads 16a, the contact 31 is broken and the conductive pattern 32 is cut, As a result, the bypass circuit 6 in the control circuit 17 of Fig. 3 is opened, so that the electric power is accumulated in the auxiliary power supply circuit 4 and the current from the car battery 2 does not make a short-circuit and then the squib 13b can be started by the crash sensor 14.

In Fig, 4, even if the bolts are slackened in the direction of arrow a by the vibration applied for a long in-operative time, the breakable contact 31 is held in the broken state, so that the bypass circuit 6 does not restore and is kept in the released state for the malfunction preventing device,

Thus, the breakable contact 31 is released by the driven bolts and the released state of the malfunction preventing device is reliably maintained even if the bolts become slack later although the breakable contact 31 is simple in its structure such as the board 31 which is carved so as to break when the bolts 18 are driven into the internal threads 16a and printed conductive pattern 32.

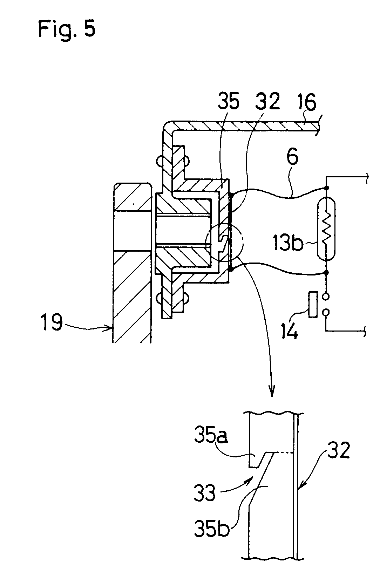

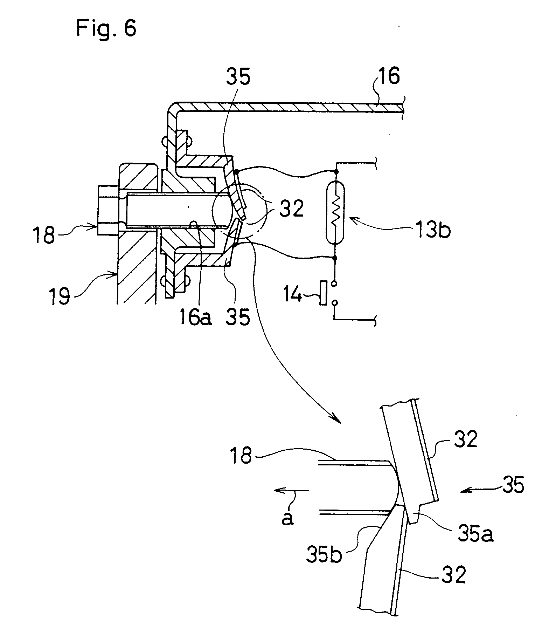

Next, another embodiment using an irreversible contact 35 will be described with reference to Fig. 5, and Fig, 6. The irreversible contact 35 keeps more reliably broken than the breakable contact 31 when it is broken, The irreversible contact 35 is formed by printing a conductive pattern 32 on the back of a notch 33 formed with a hook portion 35a and a projection 35b. Once the bolts 18 are driven to fix the air bag module and the irreversible contact 35 is broken. As shown in Fig. 6, the hook portion 35a does not ride over the projection 35b. And so the irreversible contact 35 does not return to its initial position.

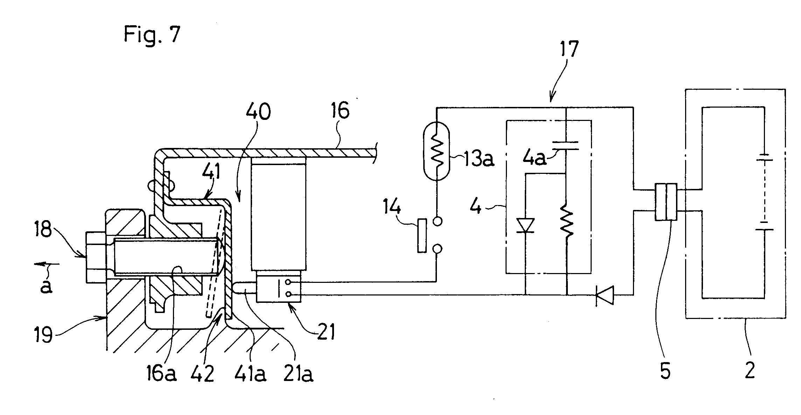

Next, another embodiment using an irreversible control member will be described with reference to Fig. 7. The control circuit 17 for feeding the electric current to the squib 13a is connected in series with a normally open microswitch 21. Incidentally, this microswitch 21 may be disposed at the output side of the auxiliary power supply circuit 4. Moreover, the microswitch 21 is switched from its opened states to closed states by a control member 40 which is attached to cover the internal threads 16a of the retainer 16. This control member 40 is composed of a leaf spring 41 fixed on the retainer 16, and a cam 42 formed on the steering wheel 19. When the air bag module is fixed, the leaf spring 41 is positioned before the cam 42, as indicated by broken lines As the bolts 18 are driven to fix the air bag module, the leaf spring 41 is pushed to ride over the cam 42 thereby to switch the microswitch 21 from its opened states to closed states. Once the leaf spring 41 rides over the cam 42, the control member 40 does not return to its initial position, even if the bolts 18 become loose to retract in the direction of arrow a, so that the microswitch 21 is held in the closed state.

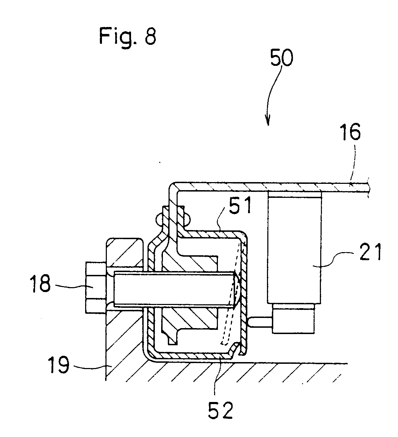

In the irreversible control member of Fig. 7, the cam 42 for making the leaf spring 41 irreversible is formed on the steering wheel 19. As shown in Fig. 8, however, a cam 52 for enabling the leading end of a leaf spring 51 to ride there over but irreversibly may be formed on the retainer 16. In this case, the leaf spring 51 is positioned inside of the cam 52 before the air bag module is mounted. When the air bag module 10 is mounted on the steering wheel 19 and the bolts 18 are driven, the leading end of the leaf spring 51 rides over the leading end of the cam 52 to switch the microswitch 21 from its opened states to closed states. Even if the bolts 18 become slack, the leaf spring 51 does not return to its initial position because of the cam 52 and so the microswitch 21 has been switched to its closed state.

An air bag module constructed by integrating an air bag, an inflator, a crash sensor and an auxiliary power supply circuit. The air bag module is equipped with either a contact for opening a squib short circuit or a switch for opening a control circuit or the auxiliary power supply circuit, so that it may not be started before a retainer is fixed on the steering wheel by means of bolts, even if connected with a car battery. The contact is opened or the switch is closed, as the bolts are driven, to prevent a malfunction. In order to prevent the contact from returning to its closed position or the switch from returning to its closed position or the switch from returning to its open position even if the bolts become slack after use of many years, the contact is broken or irreversibly switched from its closed to open positions by the bolts driven into the internal threads, or the switch is switched through the control member which is irreversibly actuated by the bolts driven into the internal threads. Thus, the air bag module is prevented from becoming inoperative.

## Claims

1. An air bag module to be fixed on a steering wheel by means of bolts (18), comprising:
- a retainer (16) having internal threads (16a), into which said bolts (18) are to be driven from said steering wheel;
- an inflator (13) for inflating an air bag (12) abruptly;
- a squib (13b) for starting said inflator (13);
- a crash sensor (14) for detecting a crash;
- a control circuit (17) having an auxiliary power supply circuit (4) for connecting said crash sensor (14) and said squib (13b) with a car battery;
**characterized by**
- a bypass circuit (6) for said squib (13b); and
- a contact (31, 35) connected in series with said bypass circuit (6),
said contact (31, 35) being irreversibly switched from its closed state to an opened state by said bolts (18) driven into said internal threads (16a).

2. An air bag module according to claim 1, **characterized in that**
said contact (31, 35) comprises on one side, facing away from said bolts (18), a conductive pattern (32) which is to be broken by the leading ends of said bolts (18) being driven, and said contact (31, 35) is broken and switched from its closed state to an opened state by said bolts (18) driven into said internal threads (16a) to be broken.

3. An air bag module according to claim 2, **characterized in that**
said portion to be broken is so cut as to be broken in a piling manner.

4. An air bag module to be fixed on a steering wheel by means of bolts (18), comprising:
- a retainer (16) having internal threads (16a), into which said bolts (18) are to be driven from said steering wheel;
- an inflator (13) for inflating an air bag (12) abruptly;
- a squib (13b) for starting said inflator (13);
- a crash sensor (14) for detecting a crash;
- a control circuit (17) having an auxiliary power supply circuit (4) for connecting said crash sensor (14) and said squib (13b) with a car battery;
**characterized by**
- a switch (21) for opening said control circuit (17) or said auxiliary power supply circuit (4) and a control member (40) for switching said switch (21) into a closed state, **wherein** said control member (40) is irreversibly actuated by said bolts (18) driven into said internal threads (16a).

5. An air bag module according to claim 4, **characterized in that**
said control member (40) includes a cam (42, 52) and a leaf spring (41, 51) adapted to ride over said cam (42, 52) but not to return.

6. An air bag module according to claim 5, **characterized in that**
said cam (52) and said leaf spring (51) are mounted on said retainer(16).

## Patentansprüche

1. Airbageinheit, die mit Bolzen (18) an einem Lenkrad befestigt wird, die aufweist
- eine Aufnahme (16) mit Gewindebohrungen (16a), in die Schrauben (18) vom Lenkrad her eingedreht werden,
- eine Treibladung (13) zum plötzlichen Aufblasen eines Airbags (12),
- einen Zünder (13b) zum Auslösen der Treibladung (13),
- einen Stoßsensor (14) zum Nachweisen eines Zusammenstoßes,
- einen Steuerstromkreis (17) mit einem Hilfstromversorgungskreis (4) zur Verbindung des Stoßsensors (14) und des Zünders (13b) mit einer Autobatterie;
gekennzeichnet durch
- einen Überbrückungsstromkreis (6) für den Zünder (13b) und
- einen Kontakt (31, 35), der mit dem Überbrückungsstromkreis 6 in Reihe geschaltet ist, wobei der Kontakt (31, 35) durch die Schrauben (18), die in die Gewindebohrungen (16) eingedreht werden, irreversiblel von seinem geschlossenen in einen offenen Zustand geschaltet wird.

2. Airbageinheit nach Anspruch 1, dadurch gekennzeichnet, daß der Kontakt (31, 35) auf der von den Schrauben abgewandten Seite einen Leiter (32) aufweist, der durch die Vorderseite der eingedrehten Schrauben (18) zerbrochen wird, und daß der Kontakt (31, 35) zerbrochen ist und von seinem geschlossenen in einen offenen Zustand geschaltet ist durch die in die Gewindebohrungen (16a) eingedrehten Schrauben (18).

3. Airbageinheit nach Anspruch 2, dadurch gekennzeichnet, daß die Bruchstelle so eingeschnitten ist, daß die zerbrochenen Teile übereinander liegen.

4. Airbageinheit, die mit Bolzen (18) an einem Lenkrad befestigt wird, die aufweist
- eine Aufnahme (16) mit Gewindebohrungen (16a), in die Schrauben (18) vom Lenkrad her eingedreht werden;
- eine Treibladung 13 zum plötzlichen Aufblasen eines Airbags 12;
- einen Zünder (13b) zum Auslösen der Treibladung (13)
- einen Stoßsensor zum Nachweisen eines Zusammenstoßes
- einen Steuerstromkreis (17) mit einem Hilfstromversorgungskreis (4) zur Verbindung des Stoßsensors (14) und des Zünders (13b) mit einer Autobatterie;
gekennzeichnet durch
- einen Schalter (21) zum Öffnen des Steuerstromkreises (17) oder des Hilfsstromversorungskreises (4) und ein Betätigungsorgan (40) zum Schalten des Schalters (21) in einen geschlossenen Zustand, wobei das Betätigungsorgan (40) durch die in die Gewindebohrung (16a) eingedrehte Schraube (18) irreversibel betätigt wird.

5. Airbageinheit nach Anspruch 4, dadurch gekennzeichnet, daß das Betätigungsorgan (40) einen Vorsprung (42, 52) und eine Blattfeder (41, 51), die angepaßt ist, über den Vorsprung (42, 52) hinweg zu gleiten, ohne zurückzukehren, aufweist.

6. Airbageinheit nach Anspruch 5, dadurch gekennzeichnet, daß der Vorsprung (52) und die Blattfeder (51) an der Aufnahme (16) angebracht sind.

## Revendications

1. Module à coussin d'air destiné à être fixé sur un volant de direction par l'intermédiaire de boulons (18), comportant :
un support (16) comportant des trous taraudés (16a), à l'intérieur desquels lesdits boulons (18) sont destinés à être boulonnés à partir dudit voient de direction,
un gonfleur (13) destiné à gonfler un coussin d'air (12) de manière brutale,
une charge explosive (13b) destinée à déclencher le fonctionnement dudit gonfleur (13),
un détecteur de collision (14) destiné à détecter une collision,
un circuit de commande (17) comportant un circuit d'alimentation électrique auxiliaire (4) destiné à relier ledit détecteur de collision (14) et ladite charge explosive (13b) à une batterie d'automobile,
caractérisé en ce qu'il comporte
un circuit de dérivation (6) destiné à ladite charge explosive (13b), et
un contact (31, 35) relié en série audit circuit de dérivation (6),
ledit contact (31, 35) étant commuté de manière irréversible de son état fermé vers son état ouvert par l'intermédiaire desdits boulons (18) boulonnés à l'intérieur desdits trous taraudés (16a).

2. Module à coussin d'air selon la revendication 1, caractérisé en ce que
ledit contact (31, 35) comporte au niveau d'un premier côté, orienté dans une direction opposée à celle desdits boulons (18), un motif conducteur (32) qui est destiné à être cassé par les extrémités de tête desdits boulons (18) lorsque boulonnés, et ledit contact (31, 35) est cassé et est commuté de son état fermé vers son état ouvert par lesdits boulons (18) lorsque ceux-ci sont boulonnés dans lesdits trous taraudés (16a).

3. Module à coussin d'air selon la revendication 2, caractérisé en ce que
ladite partie à casser est découpée de manière à casser en formant un empilage.

4. Module à coussin d'air destiné à être fixé sur un volant de direction par l'intermédiaire de boutons (18), comportant :
un support (16) comportant des trous taraudés (16a), à l'intérieur desquels lesdits boulons (18) sont destinés à être boulonnés à partir dudit volant de direction,
un gonfleur (13) destiné à gonfler un coussin d'air (12) de manière brutale,
une charge explosive (13b) destinée à déclencher le fonctionnement dudit gonfleur (13),
un détecteur de collision (14) destiné à détecter une collision,
un circuit de commande (17) comportant un circuit d'alimentation électrique auxiliaire (4) destiné à relier ledit détecteur de collision (14) et ladite charge explosive (13b) à une batterie d'automobile,
caractérisé en ce qu'il comporte
un commutateur (21) destiné à ouvrir ledit circuit de commande (17) ou ledit circuit d'alimentation électrique (4), et un élément de commande (40) destiné à commuter ledit commutateur (21) dans un état fermé, dans lequel ledit élément de commande (40) est actionné de manière irréversible par lesdits boutons (18) lorsque boulonnés dans lesdits trous taraudés (16a).

5. Module à coussin d'air selon la revendication 4, caractérisé en ce que
ledit élément de commande (40) comporte une came (42, 52) et un ressort à lame (41, 51) adapté pour passer dans un sens au-dessus de ladite came (42, 52) mais non dans l'autre.

6. Module à coussin d'air selon la revendication 5, caractérisé en ce que
ladite came (52) et ledit ressort à lame (51) sont montés sur ledit support (16).
